# EUROPÄISCHE PATENTSCHRIFT

(11) **EP 2 105 700 B1**
(45) Veröffentlichungstag und Bekanntmachung des Hinweises auf die Patenterteilung: **18.05.2016**
(21) Anmeldenummer: 09003527.0
(22) Anmeldetag: 11.03.2009
(51) Int. Cl.: G01S 19/42, G01C 21/26

(54) **Verfahren und Vorrichtung zum Auffinden einer Parklücke**
Method and device for finding a parking space
Procédé et dispositif destinés à la recherche d'un espace de stationnement

(30) Priorität: 28.03.2008 DE 102008016337; 05.12.2008 DE 102008060595; 19.01.2009 DE 102009005506
(43) Veröffentlichungstag der Anmeldung: 30.09.2009
(73) Patentinhaber: Volkswagen Aktiengesellschaft, 38440 Wolfsburg (DE)
(72) Erfinder: Auer, Richard, Dr., 38442 Wolfsburg (DE); Brosig, Stefan, Dr., 29386 Hankensbüttel (DE); Mossau, Daniel, 38448 Wolfsburg (DE); Rosebrock, Dennis, 38114 Braunschweig (DE); Spehr, Jens, 38226 Salzgitter (DE)
(74) Vertreter: Meyer, Enno

(56) Entgegenhaltungen:
- EP-A2- 0 504 638
- DE-A1- 3 813 083
- DE-A1-102005 017 360
- DE-A1-102005 049 380
- JP-A- 10 197 268
- US-A1- 2005 137 766
- US-A1- 2005 288 856
- ERIC WAHL ET AL.: "Realisierung eines Parkassistenten basierend auf Motion-Stereo" AACHENER KOLLOQUIUM FAHRZEUG- UND MOTORENTECHNIK, Bd. 16, 10. Oktober 2007 (2007-10-10), Seiten 871-880, XP008108847 Aachen, Germany

## Beschreibung

Die Erfindung betrifft ein Verfahren sowie eine Vorrichtung zum Auffinden einer zum Parken eines Kraftfahrzeuges geeigneten Parklücke gemäß dem Oberbegriff des Anspruchs 1 bzw. dem Oberbegriff des Anspruchs 7.

Systeme, die den Fahrer eines Kraftfahrzeuges beim Einparken unterstützen, also Einparksysteme oder Parkhilfesysteme, gehören zur Gruppe der Fahrerassistenzsysteme, die zunehmend in Fahrzeugen zur Erhöhung des Komforts, zur Unterstützung des Fahrers und/oder zur Erhöhung der Sicherheit eingesetzt werden. All diesen derzeitigen Systemen ist gemeinsam, dass sie mit einer geeigneten Messvorrichtung die Umgebung des eigenen Fahrzeugs vermessen und unter zur Hilfenahme diverser Algorithmen Parklücken mehr oder weniger gut erkennen und vermessen können.

Insbesondere ist die Suche nach ausreichend großen Längsparklücken, gefolgt von seitlichen Einparkmanövern, eine alltägliche Herausforderung von Fahrern von Kraftfahrzeugen. Gleichzeitig hat die Entwicklung des Fahrzeugdesigns sowohl aus optischen als auch aus sicherheitstechnischen Gründen stetig den einsehbaren Bereich um das Fahrzeug reduziert und so die Einparkaufgabe zusätzlich erschwert. Um den Fahrer daher zu entlasten und Souveränität zurück zu geben, sind diverse Parkassistenzsysteme entwickelt worden, die den Fahrer eines Kraftfahrzeuges beim Einparken unterstützen oder in der Endausbaustufe das Einparken selbsttätig durchführen sollen.

In seiner einfachsten Form ist ein derartiger Einparkassistent eine Einparkhilfe, bei der die Abstände des Fahrzeugs nach vorne und/oder hinten zu anderen Fahrzeugen unter Hindernissen gemessen und auf einem Display im Cockpit angezeigt werden. Im Fall des Unterschreitens vorgegebener Sicherheitsabstände wird eine optische, akustische und/oder haptische Warnung an den Fahrer ausgegeben, so dass dieser seinen Einparkvorgang entsprechend steuern kann. Derartige Einparkhilfen gehören mittlerweile zu den Sonderausstattungen von Fahrzeugen der Mittelklasse.

In einer weiteren Ausführungsform, wie dies beispielsweise in der DE 10 2005 017 360 A1 geschildert ist, umfasst ein Einparkassistent für das Einparken eines Kraftfahrzeuges mindestens eine Anzeigevorrichtung, eine Vorrichtung zum Vermessen von Parklücken und/oder Parktaschen, ein Steuergerät und einen Lenkaktuator, wobei die Vorrichtung eine Anzeigeeinrichtung mit einer Vielzahl von Anzeigezuständen aufweist, die den Fahrer über Parklücken oder Parktaschen betreffende Parameter und über Systemzustände des Einparkassistenten informiert. In der weiteren Ausbaustufe wird ein automatischer Parkvorgang nach vorheriger Vermessung der Parklücke durchgeführt, wie dies beispielsweise in der DE 3813083 A1 beschrieben ist. Die bekannte Vorrichtung umfasst vier Schalter bezüglich der Wahl der Betriebsart, über die der Fahrer den Ort und die Art der Parklücke angeben kann. Somit kann der Fahrer selektieren zwischen linke Parklücke, linke Parktasche, rechte Parklücke oder rechte Parktasche.

Ferner ist aus der Druckschrift E. Wahl et al.: "Realisierung eines Parkassistenten basierend auf Motion-Stereo", 16. Aachener Kolloquium Fahrzeug- und Motorentechnik 2007, S. 871-879, ein Video-basiertes Verfahren zur Parklückenvermessung bekannt, das sich auf Motion-Stereo stützt. Dabei unterscheidet das Verfahren zwei Operationsmodi, nämlich einen ersten Modus zur Vermessung der Parklücke und Bestimmung ihrer Länge. Der zweite Modus dient der verfeinerten Rekonstruktion der Fahrumgebung beim Zurücksetzen in die Lücke. Auf diese Weise können Wamfunktionen bzw. autonome Fahrmanöver realisiert werden.

Allerdings wird bei all den bekannten Systemen nur nach Freiräumen gesucht, die zum Abstellen des Kraftfahrzeuges eine ausreichende Größe aufweisen. Folglich bekommt bei den bekannten Systemen der Fahrer auch beispielsweise auf Kreuzungen oder Einmündungen oder auf Autobahnen im Stopp- und Go-Verkehr Parklücken angezeigt, die in Wahrheit nicht existieren. Um den Fahrer in diesen Situationen nicht zu verwirren, sind daher üblicherweise die Anzeigen dieser Systeme standardmäßig deaktiviert und müssen vom Fahrer explizit eingeschaltet werden, wenn er einen Parkvorgang beabsichtigt, ob dieser nun halbautomatisch oder automatisch sein soll.

Dokument DE 10 2005 049 380 A1 offenbart ein Verfahren zur Unterstützung des Einparkens eines Kraftfahrzeugs, wobei das Kraftfahrzeug mit Sensoren zur Erfassung einer Parklücke sowie mit einem Navigationssystem ausgestattet ist. Dabei wird mit Hilfe der Positionsdaten des Navigationssystems eine mögliche Parklücke auf deren Zulässigkeit überprüft. Allerdings ist auch mit dieser Zuordnung eine sichere Identifikation von vermessenen Freiräumen als Parklücken nicht unbedingt möglich.

Der Erfindung liegt daher die Aufgabe zugrunde, ein Verfahren und eine Vorrichtung anzugeben, welche eine sichere Identifikation von vermessenen Freiräumen als Parkplätze ermöglicht.

Diese Aufgabe wird durch ein Verfahren mit den Merkmalen des Anspruchs 1 sowie durch eine Vorrichtung mit den Merkmalen des Anspruchs 8 gelöst. Bevorzugte Ausgestaltungen der Erfindung sind Gegenstand der Unteransprüche.

Bei dem erfindungsgemäßen Verfahren zum Auffinden einer Parklücke, die zum Einparken eines Kraftfahrzeugs, d.h., des Eigenfahrzeugs, geeignet ist, wird das Umfeld des Kraftfahrzeugs vermessen, und aus den gemessenen Umfelddaten wird auf Freiräume in der Umgebung des Fahrzeugs geschlossen, welche möglicherweise als Parklücken verwendbar sind. Zur Entscheidung, ob der betrachtete Freiraum als mögliche Parklücke gewertet werden kann oder nicht, werden Navigationsdaten, welche die Position des Eigenfahrzeugs beschreiben, mit den gemessenen Freiraumdaten verknüpft, wobei vorgegebene Fahrsituationen, die aus den Navigationsdaten des Eigenfahrzeugs abgeleitet werden, eine Beurteilung eines Freiraums als möglichen Parkplatz ausschließen können oder unterstützen.

Vorzugsweise können Positionsinformationen des Eigenfahrzeugs, welche aus den Navigationsdatenabgeleitet werden, eine Beurteilung eines Freiraums als möglichen Parkplatz entweder ausschließen oder unterstützen.

Vorzugsweise kann eine derartige vorgegebene Fahrsituation eine Stausituation sein, in der das Kraftfahrzeug im wesentlichen in einem Stopp- und Go-Betrieb fährt und bekannte Parkhilfen im aktiven Zustand, beispielsweise auf der Autobahn, vermeintliche Parkplätze ausweisen würden.

Eine aus den Navigationsdaten abgeleitete Positionsinformation bezüglich der Position des Eigenfahrzeuges liegt dann vor, wenn beispielsweise das Fahrzeug sich auf einer Kreuzung, in einer Einmündung, in einem Kreisverkehr, auf einer Autobahn oder einer Autostraße befindet. Derartige Positionsinformationen verhindern eine Beurteilung eines Freiraums als möglichen Parkplatz, mit anderen Worten eine Verknüpfung der Positionsinformation mit einem möglichen gemessenen Freiraum schließt einen möglichen Parkplatz aus.

Sagt die Positionsinformation jedoch aus, dass sich das Fahrzeug aufgrund der Navigationsdaten und der Navigationsinformationen auf einem Parkplatz, beispielsweise einem Autobahnparkplatz oder ähnlichem, befindet, so ergibt eine Verknüpfung der Positionsinformation mit einem Freiraum einen möglichen Parkplatz.

Eine geeignete Parametrisierung von zumindest Teilen der Navigationsinformation kann eine Verknüpfung der Positionsinformation mit einem Freiraum erleichtern. So kann die Navigationsinformation beispielsweise einen boolschen Parameter "Parken zulässig/unzulässig" enthalten, der sich aus den Navigationsdaten ergibt.

Weiterhin kann die Positionsinformation auch Parkinformationen zu am Straßenrand befindlichen oder sonstigen Parkflächen enthalten. Eine derartige Parkinformation kann auch den Typ der Parklücke umfassen, d.h. ob es sich um eine Kopfparklücke, eine Schrägparklücke oder eine Querparklücke handelt.

Vorzugsweise können die Navigationsdaten länderspezifische Parametrierungen zur Beurteilung eines Freiraums hinsichtlich seiner Verwendung als möglichen Parkplatz enthalten, die ebenfalls ein Bestandteil der Navigationsinformation sein können. So können Parkplätze am Straßenrand eine Funktion der Uhrzeit und/oder des Datums sein. Mittels derartiger länderspezifischer Parametrierungen kann daher durch die Verknüpfung der Positionsinformation mit einem Freiraum sofort die Aussage getroffen werden, ob ein möglicher Parkplatz vorliegt, d.h., ob innerhalb der Uhrzeit oder an diesem Datum das Parken beispielsweise am Straßenrand erlaubt ist. Derartige Länderparametrierungen oder örtliche Parametrierungen können vom Navigationssystem automatisch ermittelt werden und in die Auswertung gelangen.

Eine erfindungsgemäße Vorrichtung zum Auffinden einer Parklücke, die zum Einparken eines Kraftfahrzeuges möglicherweise geeignet ist, umfasst:
- eine Einrichtung zum Vermessen des Umfeldes eines Eigenfahrzeugs,
- eine Auswerteeinrichtung zum Auswerten der Umfelddaten und Bestimmen von Freiräumen in der Umgebung des Eigenfahrzeuges,
- eine Navigationseinrichtung zum Bestimmen von Navigationsdaten hinsichtlich des Eigenfahrzeugs,
- eine Verknüpfungseinheit zum Verknüpfen der Navigationsdaten mit den ermittelten Freiräumen in der Umgebung des Eigenfahrzeuges zur Bewertung eines Freiraums als möglicher Parkplatz, und
   eine Verknüpfungseinheit zum Verknüpfen der Navigationsdaten und der Fahrsituationen mit den bestimmten Freiräumen in der Umgebung des Eigenfahrzeugs zur Bewertung eines Freiraums als möglicher Parkplatz.

Als Einrichtungen zur Vermessung des Umfelds kommen beispielsweise Infraroteinrichtungen, Radareinrichtungen, Laserscan-Einrichtungen und bildgebende Einrichtungen, wie beispielsweise Videokameras, oder eine Kombination mehrerer der genannten Umfelddetektoren zum Einsatz.

Ferner weist die erfindungsgemäße Vorrichtung vorzugsweise eine Anzeigeeinrichtung zum Anzeigen eines möglichen Parkplatzes und/oder weiterer für das Einparken wichtiger Parameter auf.

In der Verknüpfungseinrichtung der erfindungsgemäßen Vorrichtung wird vorzugsweise ein Freiraum dann als möglicher Parkplatz verworfen, wenn die von der Navigationseinrichtung , bestimmte Position des Eigenfahrzeugs ergibt, dass sich das Eigenfahrzeugs auf einer Kreuzung, in einer Einmündung, in einem Kreisverkehr, auf einer Autobahn oder auf einer Autostraße befindet. Die Aufzählung der genannten Positionsinformation ist nicht abschließend, sondern nur beispielhaft gedacht. Weitere Positionsinformationen, die einen Freiraum als möglichen Parkplatz ausschließen, sind Einfahrten, Hydranten, Feuerwehrausfahrten und andere derartige einen Parkplatz ausschließende Bedingungen, die unter dem Begriff Positionsinformation subsumierbar sind. Mit anderen Worten, eine Positionsinformation enthält Information über die Zulässigkeit eines Parkplatzes.

Mit anderen Worten, eine Positionsinformatiön kann, wie bereits im Vorangegangenen erwähnt, eine logische Kennung aufweisen, die darüber entscheidet, ob ein Freiraum ein möglicher Parkplatz ist oder nicht.

Andererseits wird vorzugsweise in der Verknüpfungseinheit der erfindungsgemäßen Vorrichtung ein Freiraum dann als möglicher Parkplatz bewertet, wenn die von der Navigationseinrichtung bestimmte Position des Eigenfahrzeugs ergibt, dass sich das Fahrzeug beispielsweise auf einem Parkplatz befindet. Wie bereits im Vorangegangenen erwähnt, kann die für eine positive Beurteilung eines Freiraums zuständige Positionsinformation nicht auf einen Parkplatz beschränkt sein, sondern es können auch lokale Vorschriften bezüglich des Parkens berücksichtigt werden, die beispielsweise länderspezifische Parametrierungen, die das Navigationssystem abruft. Ferner kann die Navigationsinformation Informationen zu Parkflächen und/oder Parklückentypen enthalten, die zur Plausibilisierung der erkannten Parklückenverwendet werden können.

Mit dem erfindungsgemäßen Verfahren bzw. der erfindungsgemäßen Vorrichtungen werden die Nachteile der bekannten Systeme, welche auf beliebige Freiräume abgestellt sind, vermieden. In der Erfindung werden Navigationsdaten an das Parksystems gemeldet und dort ausgewertet. Die Auswertung kann auch im Navigationsgerät oder in einer externen Einheit erfolgen, und es kann nur das Ergebnis an das Parksystem gemeldet werden. Durch die Einbeziehung der Navigationsdaten im Fahrzeug kann das System selbst erkennen, dass es sich auf einer Position befindet, an der keine Parklücken sein können, und kann auf diese Weise die Anzeige selbsttätig unterdrücken. Auch kann durch weitere insbesondere Off-Road-Informationen darauf geschlossen werden, dass sich das Fahrzeug auf einem Parkplatz befindet, und die Suche kann entsprechend angepasst werden. Dasselbe gilt für Parkplätze am Straßenrand, wobei länderspezifische Parametrierungen des Systems selbständig bei einem Grenzübertritt mittels des Navigationssystems erfolgen können.

Eine bevorzugte Ausführungsform der Erfindung wird nachfolgend anhand der Zeichnungen erläutert. Dabei zeigt
- Fig. 1: eine ersten Ausführungsform des erfindungsgemäßen Parkassistenten, und
- Fig. 2: eine zweite Ausführungsform des erfindungsgemäßen Parkassistenten.

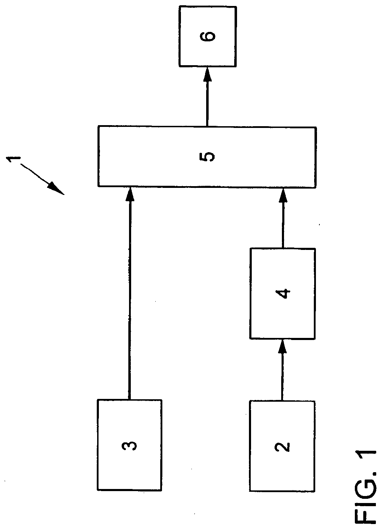

Fig. 1 zeigt eine erste Ausführungsform eines Parkassistenten 1 eines nicht dargestellten Kraftfahrzeugs, mit einer Umfeldsensorik 2 und einem Navigationssystem 3, wobei des Navigationssystem 3 eine externe oder interne Einheit sein kann. Dabei liefert die Umfeldsensorik 2 Umfelddaten an eine Auswerteeinrichtung 4, in der aus den Umfelddaten Freiräume im Umfeld des Kraftfahrzeugs bestimmt werden, die als potentielle Parkplätze geeignet wären. Ein möglicher Freiraum wird in der Auswerteeinrichtung 4 auch daraufhin untersucht, ob der Freiraum auch größenmäßig ausreichend für das Kraftfahrzeug ist. Ist dies der Fall, so kommt die Auswerteeinheit 4 zu dem positiven Ergebnis, dass im Umfeld ein möglicher Parkplatz vorhanden ist, andernfalls ist das Ergebnis negativ. Das Ergebnis, d.h. es gibt einen möglichen Parkplatz oder nicht, wird einer Verknüpfungseinheit 5 zugeführt, in welcher der mögliche Parkplatz mit den Navigationsdaten des Navigationssystem 3 verknüpft werden. Diese Navigationsdaten beinhalten neben der Position des Kraftfahrzeugs weitere für das Fahrzeug relevante Parameter, wie Fahrsituation, Straßensituation, Positionsinformation, die dem Navigationssystem 3 beispielsweise über GPS oder aufgrund der dem Navigationssystem 3 zugrundeliegenden Straßennetzinformationen zur Verfügung stehen. In der Verknüpfungseinheit 5 wird geprüft, ob beispielsweise die Positionsinformation und die Fahrsituation eine mögliche Parksituation verhindert, wie dies im Fall einer Kreuzung der Fall ist. Mit anderen Worten, befindet sich das Fahrzeug auf einer Kreuzung, so wird der potentielle Parkplatz verworfen und dieses Ergebnis der Ausgabeeinrichtung 6 mitgeteilt. Ist jedoch die Verknüpfung zwischen den Navigationsdaten und dem möglichen Parkplatz positiv, so erhält die Ausgabeeinrichtung das Ergebnis, dass ein zulässiger Parkplatz gefunden wurde und kann entsprechende Maßnahmen ergreifen, beispielsweise den Fahrer informieren.

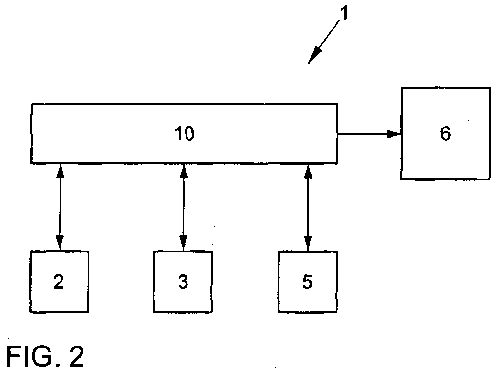

Fig. 2 zeigt eine weitere Ausführungsform des erfindungsgemäßen Parkassistenten 1, bei welchem der Verfahrensablauf in anderer Weise ausgeführt ist. Eine übergeordnete Auswerte-/Steuereinrichtung 10 veranlasst, dass die Umfeldsensorik Umfelddaten des Umfeldes des Kraftfahrzeugs liefert. Diese Umfelddaten werden in der Auswerte-/Steuereinrichtung 10 bezüglich Freiräume untersucht, die mögliche Parkplätze sein. Anschließend veranlasst die Auswerte-/Steuereinrichtung 10 die zur Verfügungsstellung von Navigationsdaten durch das Navigationssystem 3. Die Navigationsdaten sowie die Parkplatzdaten werden in einer Verknüpfungseinheit 5 miteinander verknüpft und das Ergebnis an die Auswerte-/Steuereinrichtung 10 geliefert. Ergibt die Verknüpfung der Daten, dass ein zulässiger Parkplatz ermittelt wurde, so wird dies von der Auswerte-/Steuereinrichtung 10 an eine Ausgabeeinheit 6 gemeldet und beispielsweise dem Fahrer angezeigt und/oder weiter verarbeitet.

In der Ausführungsform der Fig. 2 ist es auch möglich, dass die Auswerte-/Steuereinrichtung 10 zuerst bei dem Navigationssystem 3 bezüglich Navigationsdaten des aktuellen Standortes nachfragt und diese Daten daraufhin untersucht, ob in dem aktuellen Umfeld überhaupt ein Parken möglich ist. Ist dies nicht der Fall, wie dies beispielsweise beim Staufahren auf einer Autobahn der Fall ist, so werden zwangsläufig keine Umfelddaten benötigt, um mögliche Freiräume zu bestimmen, welche als Parkplätze in Frage kämen. Die Ausgestaltung des Verfahrens der Verknüpfung von Navigationsdaten mit Umfelddaten kann daher flexibel ausgelegt sein.

### BEZUGSZEICHENLISTE

- 1: Parkassistent
- 2: Umfeldsensorik
- 3: Navigationseinrichtung
- 4: Auswerteeinrichtung
- 5: Verknüpfungseinheit
- 6: Ausgabe
- 10: Auswerte-/Steuereinrichtung

## Patentansprüche

1. Verfahren zum Auffinden einer Parklücke, die zum Einparken eines Kraftfahrzeugs geeignet ist, wobei das Umfeld des Kraftfahrzeugs vermessen wird und aus den gemessenen Umfelddaten auf Freiräume in der Umgebung des Kraftfahrzeugs geschlossen wird, die als Parklücken verwendbar sind, wobei Navigationsdaten bezüglich der Position des Eigenfahrzeugs mit den gemessenen Freiraumdaten zur Entscheidung verknüpft werden, ob der betrachtete Freiraum als mögliche Parklücke gewertet werden kann oder nicht,
**dadurch gekennzeichnet, dass** vorgegebene Fahrsituationen, die aus den Navigationsdaten des Eigenfahrzeugs abgeleitet werden, eine Beurteilung eines Freiraums als möglichen Parkplatz ausschließen können oder unterstützen, wobei eine vorgegebene Fahrsituation durch einen Stau realisiert ist.

2. Verfahren nach Anspruch 1, **dadurch gekennzeichnet, dass** Positionsinformationen, die aus den Navigationsdaten des Eigenfahrzeugs abgeleitet werden, eine Beurteilung eines Freiraums als möglichen Parkplatz ausschließen können oder unterstützen.

3. Verfahren nach Anspruch 2, **dadurch gekennzeichnet, dass** eine Positionsinformation, die eine Beurteilung eines Freiraums als Parkplatz ausschließt, eine Kreuzung, eine Einmündung, ein Kreisverkehr, eine Autobahn oder Autostrasse ist.

4. Verfahren nach Anspruch 2, **dadurch gekennzeichnet, dass** eine Positionsinformation, die eine Beurteilung eines Freiraums als mögliche Parklücke unterstützt, ein Parkplatz, insbesondere ein Autobahnparkplatz, ist.

5. Verfahren nach einem der Ansprüche 2 bis 4, **dadurch gekennzeichnet, dass** die Positionsinformation Parkinformation zu erkannten Parkflächen aufweist.

6. Verfahren nach einem der Ansprüche 1 oder 2, **dadurch gekennzeichnet, dass** in den Navigationsdaten enthaltene länderspezifische Parametrierungen zur Beurteilung eines Freiraums hinsichtlich seiner Verwendung als möglicher Parkplatz verwendet werden.

7. Vorrichtung (1) zum Auffinden einer Parklücke, die zum Einparken eines Kraftfahrzeugs geeignet ist, aufweisend
eine Einrichtung (2) zum Vermessen des Umfeldes eines Eigenfahrzeugs,
eine Auswerteeinrichtung (4, 10) zum Auswerten der Umfelddaten und Bestimmen von Freiräumen in der Umgebung des Eigenfahrzeugs,
eine Navigationseinrichtung (3) zum Bestimmen von Navigationsdaten des Eigenfahrzeugs,
**dadurch gekennzeichnet, dass** die Vorrichtung (1) weiter aufweist:
eine Einrichtung (3) zur Bestimmung vorgegebener Fahrsituationen aus den Navigationsdaten, wobei eine vorgegebene Fahrsituation durch einen Stau realisiert ist, und
eine Verknüpfungseinheit (5) zum Verknüpfen der Navigationsdaten und der Fahrsituationen mit den bestimmten Freiräumen in der Umgebung des Eigenfahrzeugs zur Bewertung eines Freiraums als möglicher Parkplatz.

8. Vorrichtung (1) nach Anspruch 7, **dadurch gekennzeichnet, dass** die Vorrichtung (1) eine Anzeigeeinrichtung (6) zum Anzeigen eines möglichen Parkplatzes aufweist.

9. Vorrichtung (1) nach Anspruch 7 oder 8, **dadurch gekennzeichnet, dass** die Vorrichtung (1) eine Bewertungseinheit aufweist, welche die Navigationsdaten mit einer Kennung hinsichtlich der Verwendung als möglicher Parkplatz versieht.

10. Vorrichtung (1) nach einem der Ansprüche 7 bis 9, **dadurch gekennzeichnet, dass** in der Verknüpfungseinheit (5) ein Freiraum als möglicher Parkplatz verworfen wird, wenn die von der Navigationseinrichtung (3) bestimmte Position des Eigenfahrzeugs ergibt, dass sich das Fahrzeug auf einer Kreuzung, in einer Einmündung, in einem Kreisverkehr, auf einer Autobahn oder auf einer Autostrasse befindet.

11. Vorrichtung (1) nach einem der Ansprüche 7 bis 9, **dadurch gekennzeichnet, dass** in der Verknüpfungseinheit (5) ein Freiraum als möglicher Parkplatz bewertet wird, wenn die von Navigationseinrichtung (3) bestimmte Position des Eigenfahrzeugs ergibt, dass sich das Fahrzeug auf einem Parkplatz befindet.

12. Vorrichtung (1) nach einem der Ansprüche 7 bis 9, **dadurch gekennzeichnet, dass** in der Beurteilung der Freiräume in der Umgebung des Eigenfahrzeugs länderspezifische Parametrierungen des Navigationssystems (3) einfließen.

## Claims

1. Method for finding a parking space which is suitable for parking a motor vehicle, wherein the environment of the motor vehicle is measured and the measured environment data are used to infer free spaces in the surroundings of the motor vehicle which can be used as parking spaces, wherein navigation data relating to the position of the vehicle in question are linked to the measured free space data in order to decide whether or not the free space considered can be deemed to be a possible parking space, **characterized in that** predefined driving situations which are derived from the navigation data relating to the vehicle in question can exclude or support an assessment of a free space as a possible parking area, wherein a predefined driving situation is realized by a traffic jam.

2. Method according to Claim 1, **characterized in that** position information derived from the navigation data relating to the vehicle in question can exclude or support an assessment of a free space as a possible parking area.

3. Method according to Claim 2, **characterized in that** an item of position information which excludes an assessment of a free space as a parking area is an intersection, a T-junction, a roundabout, a motorway or a road.

4. Method according to Claim 2, **characterized in that** an item of position information which supports an assessment of a free space as possible parking space is a parking area, in particular a motorway parking area.

5. Method according to one of Claims 2 to 4, **characterized in that** the position information has parking information relating to identified parking places.

6. Method according to either of Claims 1 and 2, **characterized in that** country-specific parameterizations contained in the navigation data are used to assess a free space with regard to its use as a possible parking area.

7. Apparatus (1) for finding a parking space which is suitable for parking a motor vehicle, having a device (2) for measuring the environment of a vehicle in question,
an evaluation device (4, 10) for evaluating the environment data and determining free spaces in the surroundings of the vehicle in question,
a navigation device (3) for determining navigation data relating to the vehicle in question, **characterized in that** the apparatus (1) also has:
a device (3) for determining predefined driving situations from the navigation data, wherein a predefined driving situation is realized by a traffic jam, and
a linking unit (5) for linking the navigation data and the driving situations to the determined free spaces in the surroundings of the vehicle in question in order to assess a free space as a possible parking area.

8. Apparatus (1) according to Claim 7, **characterized in that** the apparatus (1) has a display device (6) for displaying a possible parking area.

9. Apparatus (1) according to Claim 7 or 8, **characterized in that** the apparatus (1) has an assessment unit which provides the navigation data with an identifier with respect to the use as a possible parking area.

10. Apparatus (1) according to one of Claims 7 to 9, **characterized in that** a free space is rejected as a possible parking area in the linking unit (5) if the position of the vehicle in question, as determined by the navigation device (3), reveals that the vehicle is at an intersection, at a T-junction, on a roundabout, on a motorway or on a road.

11. Apparatus (1) according to one of Claims 7 to 9, **characterized in that** a free space is assessed as a possible parking area in the linking unit (5) if the position of the vehicle in question, as determined by the navigation device (3), reveals that the vehicle is in a parking area.

12. Apparatus (1) according to one of Claims 7 to 9, **characterized in that** country-specific parameterizations of the navigation system (3) are included in the assessment of the free spaces in the surroundings of the vehicle in question.

## Revendications

1. Procédé pour rechercher un emplacement de stationnement, qui est approprié pour le stationnement d'un véhicule automobile, dans lequel l'environnement du véhicule automobile est mesuré et des espaces libres sont déduits dans l'environnement du véhicule automobile des données d'environnement mesurées, lesquels espaces libres peuvent être utilisés comme emplacements de stationnement, dans lequel des données de navigation concernant la position du véhicule automobile concerné sont combinées aux données d'espace libre mesurées pour décider si l'espace libre observé peut ou non être évalué comme étant un emplacement de stationnement possible,
**caractérisé en ce que** des situations de conduite prédéterminées, qui sont déduites des données de navigation du véhicule automobile concerné, peuvent exclure ou confirmer une évaluation d'un espace libre comme étant une place de stationnement possible, dans lequel une situation de conduite prédéterminée est réalisée par un embouteillage.

2. Procédé selon la revendication 1, **caractérisé en ce que** des informations de position qui sont déduites des données de navigation d'un véhicule automobile concerné peuvent exclure ou confirment une évaluation d'un espace libre comme étant une place de stationnement possible.

3. Procédé selon la revendication 2, **caractérisé en ce qu'**une information de position qui exclut l'évaluation d'un espace libre comme étant une place de stationnement est une intersection, une jonction, un rondpoint, une autoroute ou une voie rapide.

4. Procédé selon la revendication 2, **caractérisé en ce qu'**une information de position qui confirme une évaluation d'un espace libre comme étant un emplacement de stationnement possible est une place de stationnement, notamment une place de stationnement d'autoroute.

5. Procédé selon l'une quelconque des revendications 2 à 4, **caractérisé en ce que** l'information de position comprend des informations de stationnement concernant des surfaces de stationnement.

6. Procédé selon l'une quelconque des revendications 1 ou 2, **caractérisé en ce que** des paramétrages spécifiques de pays et contenus dans les données de navigation sont utilisés pour évaluer un espace libre du point de vue de son utilisation en tant que place de stationnement possible.

7. Dispositif (1) destiné à rechercher un emplacement de stationnement, qui est approprié pour le stationnement d'un véhicule automobile, comprenant :
un dispositif (2) destiné à mesurer l'environnement du véhicule automobile concerné,
un dispositif d'évaluation (4, 10) destiné à évaluer les données d'environnement et à déterminer des espaces libres dans l'environnement du véhicule automobile concerné,
un dispositif de navigation (3) destiné à déterminer des données de navigation du véhicule automobile concerné,
**caractérisé en ce que** le dispositif (1) comprend en outre :
un dispositif (3) destiné à déterminer des situations de conduite à partir des données de navigation, dans lequel une situation de conduite prédéterminée est réalisée par un embouteillage, et
une unité de combinaison (5) destinée à combiner les données de navigation et les situations de conduite aux espaces libres déterminés dans l'environnement du véhicule automobile concerné pour évaluer un espace libre comme étant une place de stationnement possible.

8. Dispositif (1) selon la revendication 7, **caractérisé en ce que** le dispositif (1) comporte un dispositif d'affichage (6) destiné à afficher une place de stationnement possible.

9. Dispositif (1) selon la revendication 7 ou 8, **caractérisé en ce que** le dispositif (1) comporte une unité d'évaluation qui attribue aux données de navigation une identification en ce qui concerne son utilisation en tant que place de stationnement possible.

10. Dispositif (1) selon l'une quelconque des revendications 7 à 9, **caractérisé en ce qu'**un espace libre est rejeté en tant que place de stationnement possible dans l'unité de combinaison (5) lorsque la position du véhicule automobile concerné, déterminée par le dispositif de navigation (3), indique que le véhicule se trouve à une intersection, à une jonction, à un rondpoint, sur une autoroute ou sur une voie rapide.

11. Dispositif (1) selon l'une quelconque des revendications 7 à 9, **caractérisé en ce qu'**un espace libre est évalué comme étant une place de stationnement possible dans l'unité de combinaison (5) lorsque la position du véhicule automobile concerné, déterminée par le dispositif de navigation (3), indique que le véhicule se trouve sur une place de stationnement.

12. Dispositif (1) selon l'une quelconque des revendications 7 à 9, **caractérisé en ce que**, lors de l'évaluation de l'espace libre dans l'environnement du véhicule automobile concerné, des paramétrages spécifiques du pays du système de navigation (3) sont pris en compte.
